# EUROPEAN PATENT SPECIFICATION

(11) **EP 2 769 934 B1**
(45) Date of publication and mention of the grant of the patent: **19.02.2020**
(21) Application number: 14156318.9
(22) Date of filing: 24.02.2014
(51) Int. Cl.: B65F 1/16, B65F 3/08

(54) **Device and method for processing confidential material**
Vorrichtung und Verfahren zur Verarbeitung von vertraulichem Material
Dispositif et procédé de traitement de matériau confidentiel

(30) Priority: 22.02.2013 NL 2010344
(43) Date of publication of application: 27.08.2014
(73) Proprietor: Van Schijndel Holding B.V., 6051 KL Maasbracht (NL)
(72) Inventor: Van Schijndel, Gijsbertus Martinus Johanna, 6051 KL MAASBRACHT (NL); Van Schijndel, Cornelis Gijsbertus, 6051 KL MAASBRACHT (NL)
(74) Representative: Algemeen Octrooi- en Merkenbureau B.V.

(56) References cited:
- EP-A1- 2 067 720
- DE-U1- 20 302 391
- US-A- 4 722 656

## Description

The present invention relates to a device for processing confidential material, designed to cooperate with a container for the storage therein of the confidential material and comprising a lifting mechanism, which can be enclosed in a casing, for emptying a bin having a storage part containing confidential material into the container, which storage part can be locked by means of a lock to a cover which at least partially closes an open upper side of the storage part, the lifting mechanism comprising a loading seat on which the bin can be placed and held, unlocking means for unlocking the lock of the bin, and a lifting frame to which the loading seat is pivotally connected such that the material present in the bin can be emptied into the container, the unlocking means comprise a first unlocking element designed for activating the unlocking of the lock present on the bin in a first manner.

Within the framework of the invention, the term "confidential material" refers to information carriers such as confidential documents, archive material and other confidential paper waste, but also diskettes, for example, memory sticks and other such data carriers.

Such a device, which is placed on a truck, is known from NL 1034785. The known device comprises a container which extends in the longitudinal direction of the truck on which it is placed. In said container, the confidential contents of the bins emptied by means of the lifting mechanism are stored. The known device is further provided with a casing. Present between the casing and the lifting mechanism is a space, in which a bin, screened from the outside environment, can be vertically moved and tilted. Such a casing ensures that confidential material will not be visible from outside when bins containing the confidential material are being emptied. The casing further prevents confidential material from being blown away. For opening the lock of a bin placed on the loading seat of the known device, the lock is provided with a lock stamp. By placing the lock stamp against a contact strip of the bin and supplying a voltage, the lock of the bin is electrically opened.

It is an object of the present invention to provide a device for processing confidential material that is more universally usable.

This object is achieved with the device according to the present invention as defined in claim 1. The unlocking means further comprise at least a second unlocking element designed for unlocking the lock present on a further bin in a second manner, wherein the device further comprises control means used to determine the type of bin that is present on the loading seat and to actuate the unlocking element to unlock the lock of the bin present on the loading seat in dependence on said lock.

It is an advantage of the device according to the invention that this makes it possible, due to the presence of at least a second unlocking element for activating the unlocking of a lock in a second manner, and in combination with the aforesaid control means, to empty more different types of bins, or at least bins provided with locks of which the unlocking can be activated in different ways, i.e. to process the confidential material stored therein.

The first unlocking element and the second unlocking element are vertically spaced from each other.

The loading seat further comprises a lifting beam for, preferably automatically, lifting the bin present on the loading seat toward the higher one of the first or the second unlocking element, such that the lock of the bin moves to within the working range of the higher unlocking element in question. If, as is currently usual, the lock of different types of bins, meaning bins having at least one lock of which the unlocking can be activated in ways that are different from each other, is provided at about the same height on the bin, it will thus be easy, using the aforesaid lifting beam, to cope with the problem of unlocking elements being in conflict with each other as regards the required space. Alternatively, the lifting beam may be configured to lift a bin placed on a loading seat over a predetermined height in the direction of an unlocking element. Said predetermined height can be automatically determined by means of the aforesaid control means. In this variant, bins differing in height and possibly also as regards their lock type can be unlocked with the unlocking means.

It is advantageous if the first unlocking element is designed for activating the unlocking of a lock in a non-mechanical manner.

Preferably, the first unlocking element is designed for electrically activating the unlocking of a lock.

Within the framework of the present invention, the phrase "electrically activating the unlocking" is understood to mean that a locking mechanism present in the lock is electrically controlled or actuated by means of the first unlocking element for locking and unlocking the cover of a bin relative to the storage part thereof, such that the locking mechanism of the lock is moved from a closed position thereof to an open position thereof, as a result of which the locking of the cover relative to the storage part is released. Electrical control or actuation of the locking mechanism of the lock can for example take place by applying an electrical voltage, current or charge to one or more electrical contact elements of the lock by means of the unlocking element. In another example, the first unlocking element comprises means for electrically controlled, wireless or contactless, for example radiographic, electro-optical or electro-inductive, communication with the lock, such that the locking mechanism present in the lock is controlled or actuated to a position for unlocking the lock under the influence thereof.

Furthermore preferably, the first unlocking element comprises a lock stamp element with an electric actuator provided thereon, which lock stamp element is movable from a position of rest beyond the reach of the bin to an unlocking position at the lock for effecting an electrical connection between the first unlocking element and the lock for unlocking the lock.

Preferably, the second unlocking element is designed for mechanically activating the unlocking of the lock.

Within the framework of the present invention, the phrase "mechanically activating the unlocking" is understood to mean that an unlocking mechanism present in the lock is controlled or actuated under the influence of mechanical activation of the lock, or, in other words, mechanical interaction between the lock and the device, in such a manner that the locking mechanism of the lock is moved from a closed position thereof to an open position thereof, as a result of which the locking engagement of the cover relative to the storage part is released.

A locking element of the lock can be depressed, for example, in that in one embodiment the second unlocking element is designed to move the bin and the device relative to each other in such a manner that the locking element is depressed as a result of said relative movement.

Preferably, the second unlocking element is an actuator device for depressing a locking element of the lock for the purpose of unlocking the lock under the influence thereof. With another type of mechanical activation of the unlocking of the lock, the actuator device may alternatively be designed for tilting a locking element, for example, or for rotating a locking element.

The first unlocking element may be designed for electrically activating the unlocking of a lock, and the second unlocking element may be designed for electrically activating the unlocking of a further lock in another manner.

The locking means may comprise a third unlocking element, which is designed for activating the unlocking of the lock present on yet another bin in a third manner.

An unlocking element may be designed for magnetically activating the unlocking of the lock.

In one embodiment, it is advantageous that the actuator device is disposed at a higher level on the lifting mechanism than the lock stamp element.

In one embodiment, it is advantageous that the loading seat has a platform to which a pivotable ramp is connected and a rear wall against which a bin placed on the loading seat can be placed.

In one embodiment, it is advantageous that the lifting beam of the loading seat is provided on the side of the rear wall of the loading seat remote from the bin, wherein the open upper side of the storage part of the bin is bounded by a projecting edge portion, which extends over the rear wall when the bin is present on the loading seat, wherein the lifting beam is designed to move upward along the rear wall for lifting the bin by the edge portion. In one embodiment, the lifting beam is designed to lift a bin automatically under the control of the control means.

The lifting beam may be designed to slightly move away from the rear wall during its upward movement, such that the bin is forced against the rear wall, at least to a greater extent, upon being lifted. In this way a clamping function and a lifting function are integrated in the lifting beam.

In one embodiment, it is furthermore advantageous that the lock stamp element comprises at least two electric actuators that can be separately driven for electrically activating the unlocking of at least two different locks, the unlocking of which can be electrically activated in both cases, wherein the control means are designed to drive an actuator or a combination of actuators designed to activate the unlocking of the lock of the bin present on the loading seat in dependence on the lock in question. The lock stamp element thus provides a multiple unlocking element, in which a central actuator, being the only driven actuator of three electric actuators provided beside each other in use, forms a first unlocking element, and wherein furthermore the two electric actuators present on either side of the central actuator, which are driven in use whilst the central actuator is not driven, form a third unlocking element, for example.

In one embodiment, it is furthermore advantageous that the device further comprises, for at least one of the first and the second unlocking means, a cover lifting mechanism for lifting the cover in use after the lock has been unlocked by the unlocking means in question. Preferably, there is provided a cover lifting mechanism at least for an unlocking element that is designed for electrically activating the unlocking of a lock. As a result, the cover lifting mechanism can function as a verification mechanism for verifying whether the lock of the electrically activable type is actually unlocked.

The unlocking means may be designed to unlock a double lock of a bin. In other words, the cover of the bin is in this case locked by means of two locks at two locations. The unlocking element may to that end be configured as a multiple locking element, preferably placed at the same vertical level. With such a device, it is alternatively possible to handle two relatively narrow bins at the same time if said bins are placed beside each other on the loading seat.

The invention also relates to a method for processing confidential material, using a device according to the invention as described above, comprising:
- placing and holding a bin comprising a storage part containing confidential material on the loading seat, which storage part is closed by means of a lock to a cover which at least partially closes the open upper side of the storage part;
- using the control means to determine the type of the bin that is present on the loading seat;
- in dependence on the lock in question, lifting of the bin by the lifting beam toward the higher one of the first or second unlocking element;
- unlocking the lock of the bin by actuating the first or second unlocking element;
- manipulating the bin with respect to the container, using the lifting mechanism, such that the material present in the bin is emptied into the container.

Advantages of the method according to the invention are analogous to the advantages as described above with reference to the device according to the invention.

Preferably, the method comprises the step, to be carried out prior to the manipulating step, of lifting the cover by means of a cover lifting mechanism as described above when a bin provided with a lock that can be unlocked in a non-mechanical manner is present on the loading seat, wherein furthermore preferably the step of manipulating the bin can only be carried out if it has been determined by detecting means that the step of lifting the cover has been carried out correctly.

The invention further relates to a vehicle, in particular a truck, provided with a container for the storage therein of confidential material and a device according to the invention as described in the foregoing, wherein the lifting mechanism can be enclosed in a casing. The term "enclosed" is understood to mean that the casing can be moved from an open position, in which a bin can be placed on the loading seat, to a closed position, in which the bin placed on the loading seat is no longer accessible to the individual. The device may be provided at a rear side of the vehicle, behind the container or on a longitudinal side of the vehicle, quite preferably recessed in the container in such a manner that the device does not project, or at least only to a minor extent, from the side of the vehicle.

The invention will now be explained in more detail by means of a description of a preferred embodiment of the device and method according to the present invention with reference to the following figures, in which:
Figure 1 is a side view of a part of a known device for processing confidential material;
Figure 2 is a side view of a part of the known device during the loading of the bin, and figures 2b and 2c are larger-scale side views, showing the unlocking and opening of a bin;
Figures 3 and 4 are larger-scale views of a preferred embodiment of unlocking means of a device according to the present invention in two respective operating conditions during the opening of a bin of a first type; and
Figures 5 and 6 are views corresponding to figures 3 and 4, respectively, showing two further respective operating conditions during the opening of a bin of a second type, which respective figures further show a short end view of an unlocking element.

Like parts are indicated by the same numerals in the various figures.

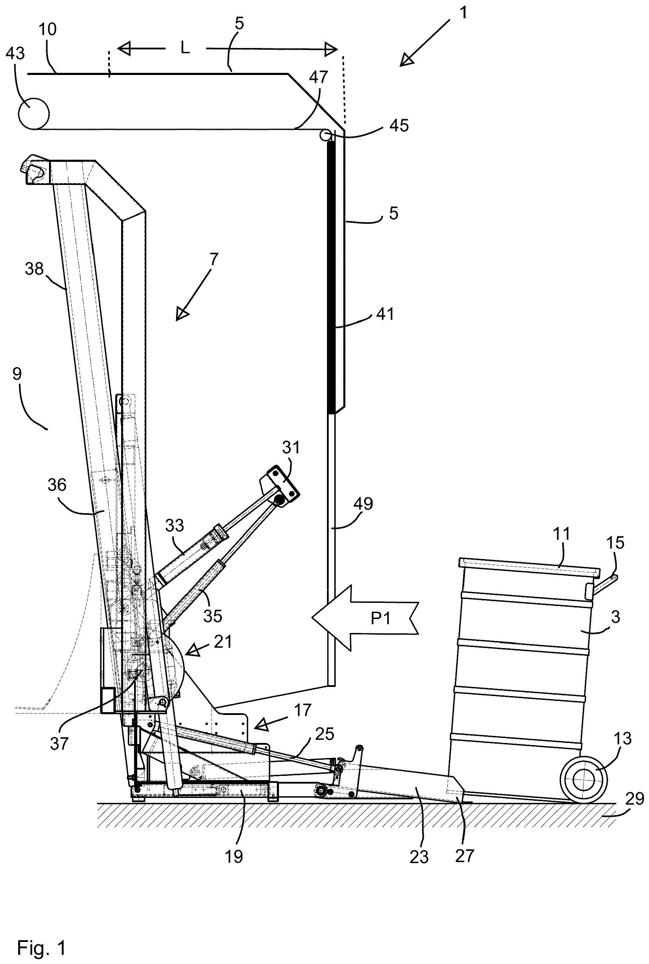

Figure 1 shows in side view a part of a known device 1 according to NL 1034785. The device 1 comprises a casing 5, a lifting mechanism 7, as well as a container 9, which is only shown in part for easy reference, but which of course comprises a space which is closed off from the outside world, in which processed or unprocessed confidential material can be safely stored. The upper side of the casing 5 merges with a cover wall 10 of the container 9, as is shown in figure 1.

The bin 3 is provided with a locked cover 11, which can only be opened by unlocking means specially provided on the device for that purpose. The bin 3 is further provided with wheels 13 and a handle 15, by means of which the bin 3 can be moved by a user.

The lifting mechanism 7 comprises a loading seat 17, which is provided with a horizontally extendable platform 19, a rear wall 21, as well as a ramp 23. The ramp 23 is pivotally connected to the platform 19 and can be pivoted by means of the arms 25 from a first, substantially vertical position to a second position as shown in figure 1, in which the end 27 of the ramp 23 remote from the platform 19 is supported on the floor surface 29.

The loading seat 17 further comprises a bin clamp 31, which can be moved by means of telescopic and pivotable arms 33, 35 from a first position, in which the arms 33, 35 and the bin clamp 31 extend upwards at an acute angle with the vertical, so that the bin 3 can be positioned under the arms 33, 35 and the bin clamp 31 in the loading seat 17 without impediment, to a second position, in which the arms 33, 35 and the bin clamp 31 extend around the bin 3 and keep it in position on the loading seat. The presence of such a bin clamp is optional.

The lifting mechanism 7 further comprises moving means in the form of a lifting frame 36 (indicated by the dotted line), which can be moved upwards and downwards at an acute angle with the vertical by means of two laterally disposed lifting cylinders along two, likewise laterally disposed slide tracks 38. The loading seat 17 is pivotally connected to the lifting frame 36 about an axis 37, about which axis 37 the loading seat 17 can be tilted by means of a tilting mechanism, in such a manner that the bin 3, which is already open at that point, can be emptied into the container 9.

The height h and the width (not shown) of the casing 5 are identical to the height and width of the container 9. The casing 5 with the lifting mechanism 7 present therein has a relatively limited length L. In an advantageous embodiment, the length L of the casing 5 is at most about 1.25 m.

The casing is further provided with a hatch, which can be moved from a closed position to an open position (shown in figure 1) by means of an electric motor 43, via a chain 47 passed over a pulley 45, thereby providing an opening 49 through which the bin 3 can be moved in the direction indicated by arrow P1.

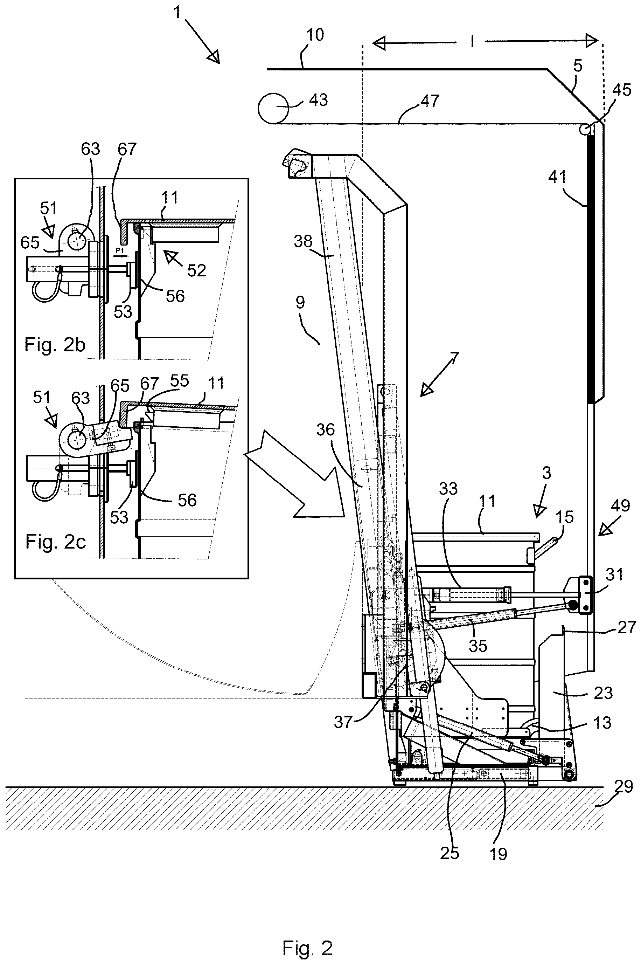

Figure 2 shows a side view of a part of the known device 1 during the loading of a bin 3, whilst the two larger-scale side views of figures 2b and 2c show the unlocking and the opening of the bin 3.

An operator has positioned the bin 3 shown in figure 2 on the loading seat 17 via the ramp 23, and subsequently the ramp 23 has been moved to the first position. Furthermore, the platform 19 has been retracted. The platform 19 and the ramp 23 firmly press the wheels 13 of the bin 3 against the rear wall 21 of the loading seat 17. The arms 33, 35 provided with the bin clamp 31 have tilted from the first position shown in figure 1 to an intermediate position as shown in figure 2, and will subsequently come into contact with the bin so as to firmly clamp it on the loading seat.

To empty the bin 3, a lock 52 of the bin must first be unlocked. Only then can the cover 11 be lifted. Figures 2b and 2c show an unlocking mechanism 51 for the lock 52, by means of which the cover 11, which is secured against being opened undesirably, can be unlocked and be opened. The lock 52 comprises a catch 55, which catch 55 normally hooks behind a projection (not shown) in the closed condition, so that the cover 11 cannot be opened. This projection can be moved by means of a magnet present in the lock 52.

The unlocking mechanism 51 comprises a lock stamp 53, which can be pneumatically moved in the direction indicated by the arrow P1 and onto a contact strip 56 of the lock 52. The unlocking of the lock is electrically activated by supplying a specific voltage by means of the lock stamp 53 which is positioned against the contact strip 56, with the magnet (not shown) in the lock 52 being activated, as a result of which the projection is moved or tilted and the catch 55 is no longer blocked. When the catch 55 is no longer blocked, the cover 11 can be lifted.

The unlocking mechanism 51 is further provided with a cover lifter 65, which is pivotable about an axis 63. When the lock 52 is opened, the cover lifter 65 can be moved into abutment with an edge 67 of the cover 11, so that it can lift the cover 11 via the edge 67, as is shown in figure 2c.

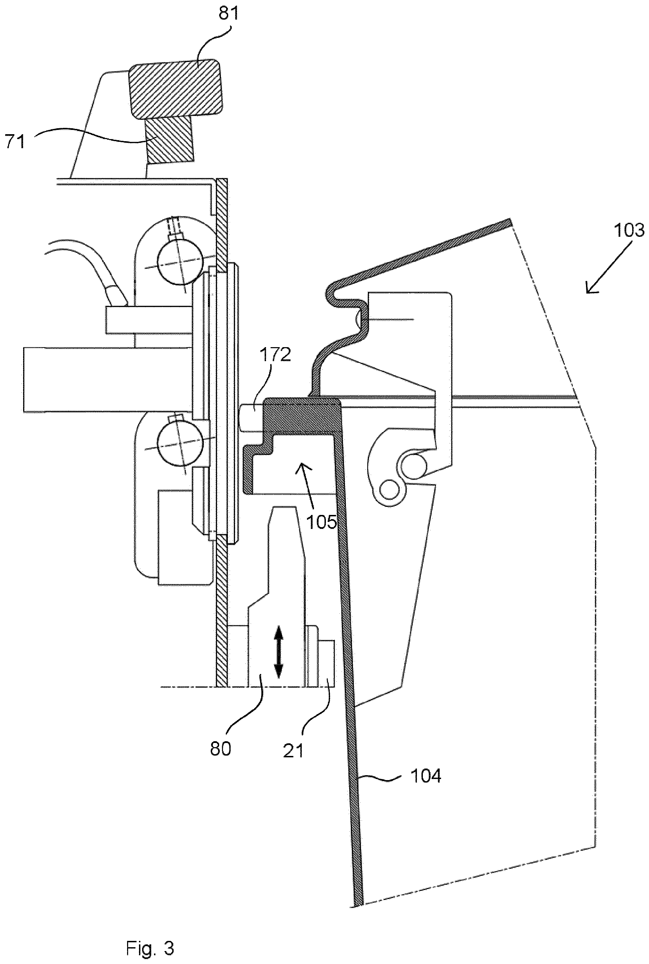

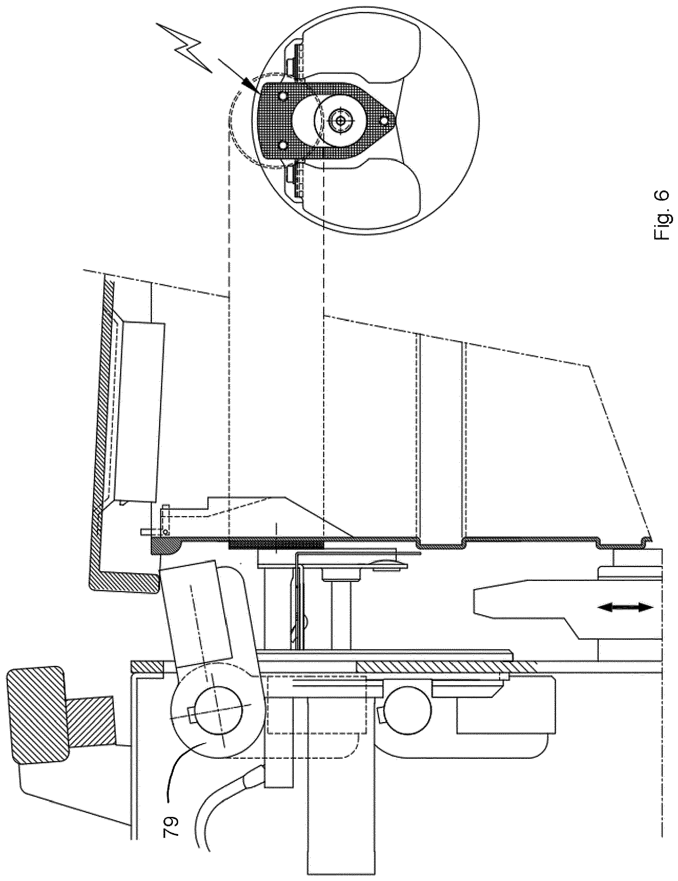

The present invention relates to a device as described above and shown in figures 1-2c. The invention in particular relates to unlocking means for unlocking the lock of a bin. In figures 3-6 there is shown a detail view of an embodiment of unlocking means of a device according to the invention. Said unlocking means according to the invention are thus provided in place of the above-described unlocking mechanism 51 of the known device 1. The device according to the invention is designed to cooperate with a container for the storage therein of the confidential material. The device is preferably connected to the container at the location of a short rear side thereof, at least in a position in which the container is placed on a vehicle. In one embodiment, the device may comprise the container.

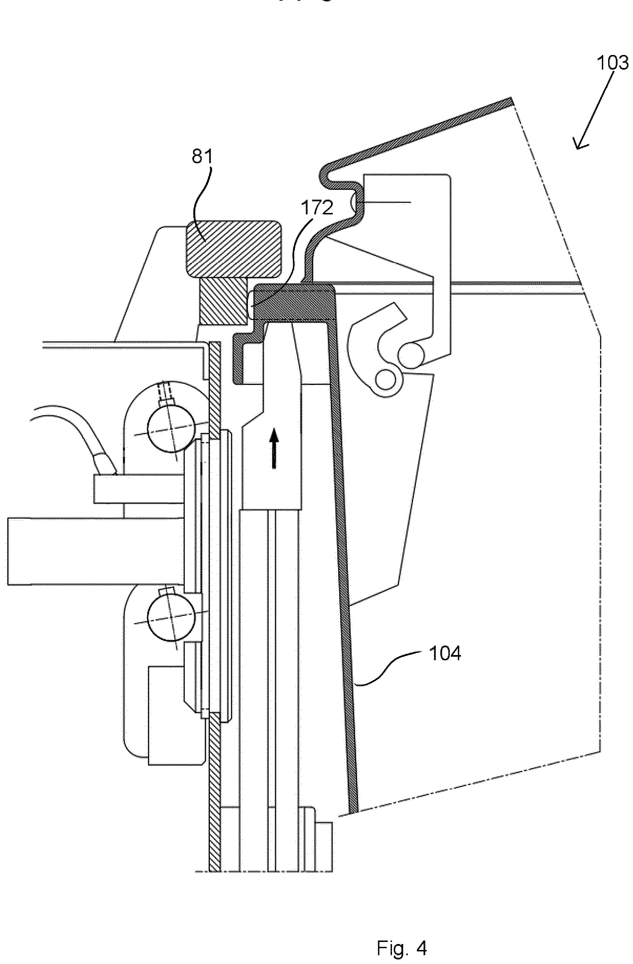

The unlocking means shown in figures 3-6 are designed to activate the unlocking of three different locks of bins. The unlocking means are to that end provided with a first unlocking element in the form of an electric actuator device 76, which will be described in more detail below, and with a second unlocking element in the form of a mechanical actuator device 71 for electrically and mechanically, respectively, activating the unlocking of a lock of a bin 103. The mechanical actuator device 71 is movable from the position of rest shown in figure 3, in which it is beyond the reach of the bin 103, to an active position in which it is in contact with an unlocking pin 172 of the bin 103, depressing said pin at least to such an extent that the lock position changes from the locked position shown in figure 3 to the unlocked position shown in figure 4.

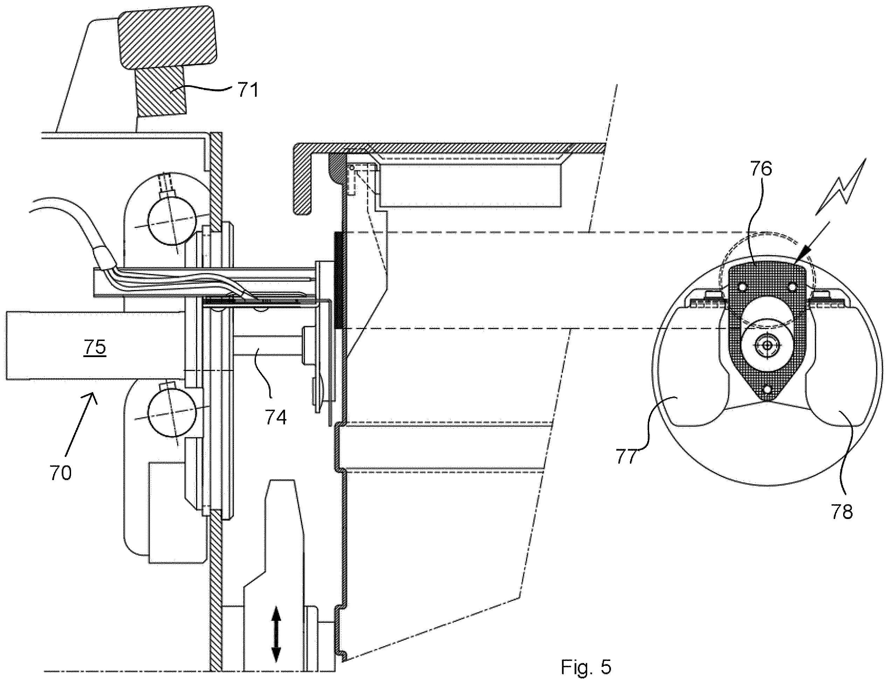

The unlocking means also comprise the aforesaid first unlocking element in the form of an electric actuator device 76 provided on a lock stamp element 70. See figure 5. By means of said electric actuator device 76, a lock to be unlocked in an electrically activated manner can be unlocked by means of a single contact element in a similar manner as described above with reference to the unlocking mechanism 51 of the known device 1.

The unlocking means moreover comprise a third unlocking element in the form of electric actuator devices 77 and 78 provided on the same lock stamp element 70. Using said actuator devices, a further lock type to be electrically unlocked and comprising a multiple contact element can be unlocked. An electric circuit may be applied via the devices 77 and 78, for example. Optionally, the actuator device 76 is used as a data link in this configuration, for example for reading a memory medium present in the lock, and optionally also for writing data thereon, for example concerning the number of times a lock has already been opened, data of the user of the bin, or the like.

The first and the third unlocking element 76 and 77, 78, respectively, are both provided at the free end of a piston rod 74, which piston rod 74 is connected to a piston of a pneumatically actuated piston/cylinder element 75 at its other end. As a result, the second and the third unlocking element can jointly be moved from a position of rest (not shown) beyond the reach of the bin 3 to an unlocking position shown in figure 5.

A cover lifting mechanism 79 complements the first and the third unlocking element 76 and 77, 78, respectively, which lifting mechanism operates in a comparable manner as the above-described cover lifter 65 of the known device 1.

The height of the lock of the different bins having different lock types is usually about the same. In order to cope with problems regarding the required space, the second unlocking element 71 and the combination of the first and the third unlocking element 76 and 77, 78, respectively, are disposed above each other, as shown in figures 3-6. The lock of a bin that rests on the platform of the loading seat is located at a height such that it is positioned opposite the first and the third unlocking element 76 and 77, 78, respectively, as shown in figure 5. The lifting mechanism further comprises a lifting beam 80, which is provided in a space behind the rear wall 21 of the loading seat 17. As shown in figure 3, the rear wall 21 does not extend over the entire height of a bin 103, but only up to a position a certain distance below a projecting edge portion 105 of the storage part 104 of the bin 103. In the illustrated situation, in which the bin 103 is placed on the loading seat, the edge portion 105 extends to over the rear wall 21. When the lifting beam 80 is moved upward in this situation, it will engage under the edge portion 105 and can thus lift the bin 103 by its edge portion 105 so as to bring the bin 103 within the reach of the second unlocking element 71. Compare figure 3 with figure 4, in which figure 4 the bin 3 has been automatically lifted by means of the lifting beam 80, such that the unlocking pin 172 thereof is located within reach of the second unlocking element 71, so that the unlocking pin can be depressed upon actuation of the mechanical actuator element configured as the second unlocking element. When the bin 103 is being lifted as described above, the bin clamp 31 is not in clamping contact with the bin 103. In order to prevent the bin 103 from becoming detached therefrom upon being emptied of its contents, in which situation the bin at least in part hangs upside down, the lifting mechanism also comprises an edge fixation element 81, which is fixedly provided on the mechanical actuator device 71. The edge portion of the bin can be blocked at an upper side thereof by means of the edge fixation element, such that the container is fixed between the lifting beam 80 and the edge fixation element 81 with its edge portion. Actually integrating the mechanical actuator device 71 and the edge fixation element 81 achieves that these two parts can be jointly moved by a single actuator to within the reach of the bin, where the lock of the bin is thus unlocked and the bin is to a large extent fixed in position on the loading seat.

A cover lifting mechanism as described above with reference to the first and the third unlocking element 76 and 77, 78, respectively, can also complement the second unlocking element 71.

The device according to the invention as described above can be used in a method for processing confidential material in the following manner.

In the first place, a bin such as a bin 3 or 103 as described above is placed on the platform of the loading seat 17. A hatch 41 may be opened in advance, and the hatch can now be closed again so that access to the bin from outside is no longer possible.

Control means are used to determine the type of bin that is present on the loading seat 17, i.e. a bin having a lock to be activated in a particular way. This may be done by an operator before or after placement of the bin by pressing a particular button on the device so as to thus select the correct type of bin. The control means may also be provided with reading means, for example for electronically and automatically reading a mark such as a bar code, QR code or RFID tag or the like provided on the bin for automatically determining the type of bin in this way for the purpose of actuating the unlocking element designed to unlock the bin.

Then the lifting beam is activated, preferably automatically, in dependence on the unlocking element to be used for lifting the bin, if necessary, to within the reach of the aforesaid unlocking element to be used. Preferably, the bin is furthermore substantially fixed in position on the loading seat in one or more of the above-described manners.

Then the lock of the bin is automatically unlocked, using the unlocking element designed to unlock the same.

If the lock of the bin can be unlocked by electronic means, the cover is preferably lifted a little by means of the cover lifting mechanism. Optionally, the device may be provided with releasing means which are designed to release the lifting mechanism for emptying the contents of the bin only if the cover lifting mechanism has actually been able to lift the cover, for example by measuring the angular displacement of a cover lifting arm that can pivot about an axis. In this way it can be achieved that emptying of the bin, at least manipulating the bin to that end, will only take place if the electric opening of the lock of the bin has been successful, which can be determined by making use of the cover lifting mechanism.

Subsequently, the bin is actually manipulated in such a manner that it is at least in part held upside down over the container, such that the unlocked cover will open further under the influence of the force of gravity and/or of the contents of the bin, so that the contents of the bin will be emptied into the container.

The above-described step of lifting the cover can also be used with a bin comprising a lock to be mechanically unlocked. The added value is lower in that case, however, since the risk that the cover is not unlocked whilst the mechanical actuator device, on the other hand, has been moved to its unlocking position, which can be detected by the detection means, is very small, in contrast to the situation with a lock that is to be electrically unlocked.

## Claims

1. A device (1) for processing confidential material, designed to cooperate with a container (9) for the storage therein of the confidential material and comprising a lifting mechanism (7), which can be enclosed in a casing (5), for emptying a bin (3) having a storage part containing confidential material into the container (9), which storage part is configured to be locked by means of a lock (52) to a cover (11) which at least partially closes an open upper side of the storage part, the lifting mechanism (7) comprising a loading seat (17) on which the bin (3) can be placed and held, unlocking means (76, 71) for unlocking the lock (52) of the bin (3), and a lifting frame (36) to which the loading seat (17) is pivotally connected such that the material present in the bin (3) can be emptied into the container (9), said unlocking means (76, 71) comprise a first unlocking element (76) designed for activating the unlocking of the lock (52) present on the bin (3) in a first manner, **characterised in that** the unlocking means (76, 71) further comprise at least a second unlocking element (71) which is designed for unlocking the lock (52) present on a further bin (103) in a second manner, wherein the device (1) further comprises control means used to determine the type of bin that is present on the loading seat and to actuate the unlocking element (76; 71) to unlock the lock (52) of the bin (3; 103) present on the loading seat (17) in dependence on said lock (52), wherein the first unlocking element (76) and the second unlocking element (71) are vertically spaced from each other, and
wherein the loading seat (17) further comprises a lifting beam (80) for lifting the bin (3; 103) present on the loading seat (17) toward the higher one of the first (76) or the second (71) unlocking element, such that the lock (52) of the bin (3; 103) moves to within the working range of the higher unlocking element (76, 71) in question.

2. The device (1) according to claim 1, wherein the first unlocking element (76) is designed for activating the unlocking of the lock (52) in a non-mechanical manner, preferably electrically.

3. The device (1) according to claim 2, wherein the first unlocking element (76) comprises a lock stamp element (70) with an electric actuator provided thereon, which lock stamp element (70) is movable from a position of rest beyond the reach of the bin (3) to an unlocking position at the lock (52) for effecting an electrical connection between the first unlocking element (76) and the lock (52) for unlocking the lock (52).

4. The device (1) according to any one of the preceding claims, wherein the second unlocking element (71) is designed for mechanically activating the unlocking of the lock (52).

5. The device (1) according to claim 4, wherein the second unlocking element is an actuator device (71) for depressing a locking element (172) of the lock (52) for the purpose of unlocking the lock (52) under the influence thereof.

6. The device (1) according to claims 3 and 5, wherein the actuator device (71) is disposed at a higher level on the lifting mechanism (7) than the lock stamp element (70).

7. The device (1) according to any one of the preceding claims, wherein the loading seat (17) has a platform (19) to which a pivotable ramp (23) is connected and a rear wall (21) against which the bin (3; 103) placed on the loading seat (17) can be placed.

8. The device (1) according to claim 7, wherein the lifting beam (80) of the loading seat (17) is provided on the side of the rear wall (21) of the loading seat (17) remote from the bin (3; 103) when the bin (3; 103) is present on the loading seat (17), wherein an open upper side of a storage part of the bin (3; 03) is bounded by a projecting edge portion (105), which extends over the rear wall (21) when the bin (3; 103) is present on the loading seat (17), wherein the lifting beam (80) is designed to move upward along the rear wall (21) for lifting the bin (3; 103) by the edge portion (105).

9. The device (1) according to claim 3, wherein the lock stamp element (70) comprises at least two electric actuators (76; 77; 78) that can be separately driven for unlocking of at least two different locks, the unlocking of which can be electrically activated in both cases, wherein the control means are designed to control the actuator or a combination of actuators designed to activate the unlocking of the lock (52) of the bin (3; 103) present on the loading seat (17) in dependence on the lock in question.

10. The device (1) according to any one of the preceding claims, further comprising, for at least one of the first (76) and the second (71) unlocking means, a cover lifting mechanism (79) for lifting the cover (11) in use after the lock (52) has been unlocked by the unlocking means (76, 71) in question.

11. A method for processing confidential material, using the device (1) according to one or more of the preceding claims, comprising:
- placing and holding a bin (3; 103) comprising a storage part containing confidential material on the loading seat (17), which storage part is closed by means of a lock (52) to a cover (11) which at least partially closes the open upper side of the storage part;
using the control means to determine the type of bin (3; 103) that is present on the loading seat (17);
- in dependence on the lock in question, lifting of the bin (3; 103) by the lifting beam (80) toward the higher one of the first (76) or second (71) unlocking element;
- unlocking the lock (52) of the bin (3; 103) by actuating the first (76) or second (71) unlocking element;
- manipulating the bin (3; 103) with respect to the container (9), using the lifting mechanism (7), such that the material present in the bin (3; 103) is emptied into the container (9).

12. The method according to claim 11, using the device according to claim 10, comprising the step, to be carried out prior to the manipulating step by the lifting mechanism (7) of lifting the cover by means of the cover lifting mechanism (79) when a bin (3; 103) provided with a lock that can be unlocked in a non-mechanical manner is present on the loading seat (17), wherein furthermore preferably the step of manipulating the bin is only carried out if it has been determined by detecting means that the step of lifting the cover has been carried out correctly.

13. A vehicle provided with a container (9) for the storage therein of confidential material and a device (1) according to any one of claims 1 - 10.

## Patentansprüche

1. Vorrichtung (1) zum Verarbeiten von vertraulichem Material, ausgebildet zum Zusammenwirken mit einem Behälter (9), zum darin Lagern des vertraulichen Materials, und umfassend einen Hebemechanismus (7), der in einem Gehäuse (5) umschlossen werden kann, um ein Behältnis (3) mit einem Lagerteil, der vertrauliches Material enthält, in den Behälter (9) zu entleeren, wobei der Lagerteil ausgestaltet ist, um mittels einer Verriegelung (52) an einer Abdeckung (11) verriegelt zu werden, die eine offene Oberseite des Lagerteils wenigstens teilweise verschließt, der Hubmechanismus (7) umfasst eine Ladeaufnahme (17), auf dem das Behältnis (3) platziert und gehalten werden kann, Entriegelungsmittel (76, 71) zum Entriegeln der Verriegelung (52) des Behältnisses (3), und ein Hubgestell (36), mit dem die Ladeaufnahme (17) schwenkbar verbunden ist, so dass das im Behältnis (3) vorhandene Material in den Behälter (9) entleerbar ist, wobei die Entriegelungsmittel (76, 71) ein erstes Entriegelungselement (76) umfassen, das ausgebildet ist zum Aktivieren der Entriegelung der am Behältnis (3) befindlichen Verriegelung (52) in einer ersten Weise,
**dadurch gekennzeichnet, dass**
die Entriegelungsmittel (76, 71) zudem wenigstens ein zweites Entriegelungselement (71) umfassen, das ausgebildet ist zum Entriegeln der an einem weiteren Behältnis (103) befindlichen Verriegelung (52) in einer zweiten Weise,
wobei die Vorrichtung (1) zudem Steuermittel umfasst, die zum Bestimmen des Typs des Behältnisses, das auf der Ladeaufnahme vorhanden ist, verwendet werden und zum Betätigen des Entriegelungselements (76, 71) zum Entriegeln der Verriegelung (52) des auf der Ladeaufnahme (17) vorhandenen Behältnisses (3, 103), in Abhängigkeit von der Verriegelung (52),
wobei das erste Entriegelungselement (76) und das zweite Entriegelungselement (71) vertikal voneinander beabstandet sind, und
wobei die Ladeaufnahme (17) zudem eine Hubtraverse (80) umfasst, zum Anheben des auf der Ladeaufnahme (17) vorhandenen Behältnisses (3, 103) in Richtung des höheren des ersten (76) oder des zweiten (71) Entriegelungselements, so dass sich die Verriegelung (52) des Behältnisses (3, 103) in den Arbeitsbereich des betreffenden höheren Entriegelungselements (76, 71) bewegt.

2. Vorrichtung (1) nach Anspruch 1, wobei das erste Entriegelungselement (76) ausgebildet ist zum Aktivieren der Entriegelung der Verriegelung (52) auf nichtmechanische Weise, vorzugsweise elektrisch.

3. Vorrichtung (1) nach Anspruch 2, wobei das erste Entriegelungselement (76) ein Verriegelungs-Stempelelement (70) mit einem daran vorgesehenen elektrischen Betätigungsglied umfasst, wobei das Verrieglungs-Stempelelement (70) bewegbar ist von einer Ruheposition außerhalb der Reichweite des Behältnisses (3) in eine Entriegelungsposition an der Verriegelung (52), um eine elektrische Verbindung zwischen dem ersten Entriegelungselement (76) und der Verriegelung (52) herzustellen, zum Entriegeln der Verriegelung (52).

4. Vorrichtung (1) nach einem der vorhergehenden Ansprüche, wobei das zweite Entriegelungselement (71) zum mechanischen Aktivieren des Entriegelns der Verriegelung (52) ausgebildet ist.

5. Vorrichtung (1) nach Anspruch 4, wobei das zweite Entriegelungselement eine Betätigungsvorrichtung (71) ist zum Niederdrücken eines Verriegelungselements (172) der Verriegelung (52) zum Entriegeln der Verriegelung (52) unter dessen Einfluss.

6. Vorrichtung (1) nach den Ansprüchen 3 und 5, wobei die Betätigungsvorrichtung (71) auf einer höheren Ebene am Hubmechanismus (7) angeordnet ist als das Verriegelungs-Stempelelement (70).

7. Vorrichtung (1) nach einem der vorhergehenden Ansprüche, wobei die Ladeaufnahme (17) eine Plattform (19) aufweist, mit der eine schwenkbare Rampe (23) verbunden ist, und eine Rückwand (21), gegen die das auf der Ladeaufnahme (17) platzierte Behältnis (3, 103) platzierbar ist.

8. Vorrichtung (1) nach Anspruch 7, wobei die Hubtraverse (80) der Ladeaufnahme (17) auf der dem Behältnis (3, 103) abgewandten Seite der Rückwand (21) der Ladeaufnahme (17) vorgesehen ist, wenn das Behältnis (3, 103) auf der Ladeaufnahme (17) vorhanden ist, wobei eine offene Oberseite eines Lagerteils des Behältnisses (3, 103) durch einen vorstehenden Kantenabschnitt (105) begrenzt ist, der sich über die Rückwand (21) erstreckt, wenn das Behältnis (3, 103) auf der Ladeaufnahme (17) vorhanden ist, wobei die Hubtraverse (80) ausgebildet ist zum aufwärts Bewegen entlang der Rückwand (21) zum Anheben des Behältnisses (3, 103) durch den Kantenabschnitt (105).

9. Vorrichtung (1) nach Anspruch 3, wobei das Verriegelungs-Stempelelement (70) wenigstens zwei elektrische Betätigungsglieder (76, 77, 78) umfasst, die zum Entriegeln von wenigstens zwei verschiedenen Verriegelungen separat angetrieben werden können, deren Entriegelung in beiden Fällen elektrisch aktivierbar ist, wobei die Steuermittel zum Steuern des Betätigungsglieds ausgebildet ist oder einer Kombination von Betätigungsgliedern, ausgebildet zum Aktivieren der Entriegelung der Verriegelung (52) des Behältnisses (3, 103), das sich auf der Ladeaufnahme (17) befindet, in Abhängigkeit von der betreffenden Verriegelung.

10. Vorrichtung (1) nach einem der vorhergehenden Ansprüche, zudem umfassend, für wenigstens eines der ersten (76) und zweiten (71) Entriegelungsmittel, einen Abdeckungshubmechanismus (79) zum Anheben der Abdeckung (11) im Gebrauch, nachdem die Verriegelung (52) durch die betreffenden Entriegelungsmittel (76, 71) entriegelt wurde.

11. Verfahren zur Verarbeitung von vertraulichem Material unter Verwendung der Vorrichtung (1) gemäß einem oder mehreren der vorhergehenden Ansprüche, umfassend:
- Platzieren und Halten eines Behältnisses (3, 103), das einen Lagerteil umfasst, der vertrauliches Material enthält, auf der Ladeaufnahme (17), wobei der Lagerteil mittels einer Verriegelung (52) an einer Abdeckung (11) geschlossen ist, die die offene Oberseite des Lagerteils wenigstens teilweise verschließt;
- Verwenden der Steuermittel zum Bestimmen des Typs des Behältnisses (3, 103), der auf der Ladeaufnahme (17) vorhanden ist;
- Anheben des Behältnisses (3, 103) durch die Hubtraverse (80) in Richtung des höheren des ersten (76) oder zweiten (71) Entriegelungselements, in Abhängigkeit von der betreffenden Verriegelung;
- Entriegeln der Verriegelung (52) des Behältnisses (3, 103) durch Betätigen des ersten (76) oder zweiten (71) Entriegelungselements;
- Manipulieren des Behältnisses (3, 103) in Bezug auf den Behälter (9), unter Verwendung des Hubmechanismus (7), so dass das im Behältnis (3, 103) vorhandene Material in den Behälter (9) entleert wird.

12. Verfahren nach Anspruch 11 unter Verwendung der Vorrichtung nach Anspruch 10, umfassend den Schritt, der vor dem Manipulationsschritt durch den Hubmechanismus (7) durchzuführen ist, des Anhebens der Abdeckung mittels des Abdeckungshubmechanismus (79), wenn auf der Ladeaufnahme (17) ein Behältnis (3, 103) vorhanden ist, welches mit einer Verriegelung versehen ist, die auf nicht mechanisch Weise entriegelbar ist, wobei zudem vorzugsweise der Schritt des Manipulierens des Behältnisses nur durchgeführt wird, wenn durch Erfassungsmittel bestimmt wurde, dass der Schritt des Anhebens der Abdeckung korrekt durchgeführt wurde.

13. Fahrzeug mit einem Behälter (9) zum darin Lagern von vertraulichem Material und einer Vorrichtung (1) nach einem der Ansprüche 1 - 10.

## Revendications

1. Dispositif (1) pour le traitement d'un matériel confidentiel, conçu pour coopérer avec un récipient (9) pour le stockage dans celui-ci du matériel confidentiel et comprenant un mécanisme de levage (7), qui peut être enfermé dans un boîtier (5), pour vider un bac (3) ayant une partie de stockage contenant un matériel confidentiel dans le récipient (9), laquelle partie de stockage est configurée pour être verrouillée au moyen d'un verrou (52) à un couvercle (11) qui ferme au moins partiellement un côté supérieur ouvert de la partie de stockage, le mécanisme de levage (7) comprenant un siège de chargement (17) sur lequel le bac (3) peut être placé et maintenu, des moyens de déverrouillage (76, 71) pour déverrouiller le verrou (52) du bac (3), et un cadre de levage (36) auquel le siège de chargement (17) est relié en pivotement de sorte que le matériel présent dans le bac (3) puisse être vidé dans le récipient (9), lesdits moyens de déverrouillage (76, 71) comprennent un premier élément de déverrouillage (76) conçu pour activer le déverrouillage du verrou (52) présent sur le bac (3) d'une première manière,
**caractérisé en ce que** les moyens de déverrouillage (76, 71) comprennent en outre au moins un deuxième élément de déverrouillage (71) qui est conçu pour déverrouiller le verrou (52) présent sur un bac supplémentaire (103) d'une deuxième manière, dans lequel le dispositif (1) comprend en outre des moyens de commande utilisés pour déterminer le type de bac qui est présent sur le siège de chargement et pour actionner l'élément de déverrouillage (76 ; 71) pour déverrouiller le verrou (52) du bac (3 ; 103) présent sur le siège de chargement (17) en fonction dudit verrou (52),
dans lequel le premier élément de déverrouillage (76) et le deuxième élément de déverrouillage (71) sont verticalement espacés l'un de l'autre, et
dans lequel le siège de chargement (17) comprend en outre une barre de levage (80) pour soulever le bac (3 ; 103) présent sur le siège de chargement (17) vers l'élément le plus haut des premier (76) et deuxième (71) éléments de déverrouillage, de sorte que le verrou (52) du bac (3 ; 103) se déplace vers l'intérieur de la plage de travail de l'élément de déverrouillage le plus haut (76, 71) en question.

2. Dispositif (1) selon la revendication 1, dans lequel le premier élément de déverrouillage (76) est conçu pour activer le déverrouillage du verrou (52) de manière non mécanique, de préférence électriquement.

3. Dispositif (1) selon la revendication 2, dans lequel le premier élément de déverrouillage (76) comprend un élément de poinçon de verrouillage (70) avec un actionneur électrique prévu sur celui-ci, lequel élément de poinçon de verrouillage (70) est mobile d'une position de repos au-delà de la portée du bac (3) à une position de déverrouillage au niveau du verrou (52) pour effectuer une connexion électrique entre le premier élément de déverrouillage (76) et le verrou (52) afin de déverrouiller le verrou (52).

4. Dispositif (1) selon l'une quelconque des revendications précédentes, dans lequel le deuxième élément de déverrouillage (71) est conçu pour activer mécaniquement le déverrouillage du verrou (52).

5. Dispositif (1) selon la revendication 4, dans lequel le deuxième élément de déverrouillage est un dispositif d'actionnement (71) destiné à enfoncer un élément de verrouillage (172) du verrou (52) dans le but de déverrouiller le verrou (52) sous l'effet de celui-ci.

6. Dispositif (1) selon les revendications 3 et 5, dans lequel le dispositif d'actionnement (71) est disposé à un niveau plus élevé sur le mécanisme de levage (7) que l'élément de poinçon de verrouillage (70).

7. Dispositif (1) selon l'une quelconque des revendications précédentes, dans lequel le siège de chargement (17) a une plate-forme (19) sur laquelle est reliée une rampe pivotante (23) et une paroi arrière (21) contre laquelle peut être placé le bac (3 ; 103) placé sur le siège de chargement (17).

8. Dispositif (1) selon la revendication 7, dans lequel la barre de levage (80) du siège de chargement (17) est prévue sur le côté de la paroi arrière (21) du siège de chargement (17) à distance du bac (3 ; 103) lorsque le bac (3 ; 103) est présent sur le siège de chargement (17), où un côté supérieur ouvert d'une partie de stockage du bac (3 ; 103) est délimité par une partie de bord saillant (105), qui s'étend sur la paroi arrière (21) lorsque le bac (3 ; 103) est présent sur le siège de chargement (17), où la barre de levage (80) est conçue pour se déplacer vers le haut le long de la paroi arrière (21) pour soulever le bac (3 ; 103) par la partie de bord (105).

9. Dispositif (1) selon la revendication 3, dans lequel l'élément de poinçon de verrouillage (70) comprend au moins deux actionneurs électriques (76 ; 77 ; 78) qui peuvent être entraînés séparément pour le déverrouillage d'au moins deux verrous différents, dont le déverrouillage peut être activé électriquement dans les deux cas, où les moyens de commande sont conçus pour commander l'actionneur ou une combinaison d'actionneurs conçu(s) pour activer le déverrouillage du verrou (52) du bac (3 ; 103) présent sur le siège de chargement (17) en fonction du verrou en question.

10. Dispositif (1) selon l'une quelconque des revendications précédentes, comprenant en outre, pour au moins l'un des premier (76) et deuxième (71) moyens de déverrouillage, un mécanisme de levage de couvercle (79) pour soulever le couvercle (11) lors de l'utilisation après que le verrou (52) a été déverrouillé par les moyens de déverrouillage (76, 71) en question.

11. Procédé de traitement d'un matériel confidentiel, en utilisant le dispositif (1) selon une ou plusieurs des revendications précédentes, comprenant le fait :
- de placer et maintenir un bac (3 ; 103) comprenant une partie de stockage contenant un matériel confidentiel sur le siège de chargement (17), laquelle partie de stockage est fermée au moyen d'un verrou (52) par rapport à un couvercle (11) qui ferme au moins partiellement le côté supérieur ouvert de la partie de stockage ;
- d'utiliser les moyens de commande pour déterminer le type de bac (3 ; 103) qui est présent sur le siège de chargement (17) ;
- en fonction du verrou en question, de soulever le bac (3 ; 103) par la barre de levage (80) vers l'élément le plus haut des premier (76) et deuxième (71) éléments de déverrouillage ;
- de déverrouiller le verrou (52) du bac (3 ; 103) en actionnant le premier (76) ou deuxième (71) élément de déverrouillage ;
- de manipuler le bac (3 ; 103) par rapport au récipient (9), en utilisant le mécanisme de levage (7), de sorte que le matériel présent dans le bac (3 ; 103) soit vidé dans le récipient (9).

12. Procédé selon la revendication 11, utilisant le dispositif selon la revendication 10, comprenant l'étape, à effectuer avant l'étape de manipulation par le mécanisme de levage (7) consistant à soulever le couvercle au moyen du mécanisme de levage de couvercle (79) lorsqu'un bac (3 ; 103) pourvu d'un verrou qui peut être déverrouillé de manière non mécanique est présent sur le siège de chargement (17), où, en outre, de préférence l'étape de manipulation du bac n'est effectuée que s'il a été déterminé par des moyens de détection que l'étape de levage du couvercle a été effectuée correctement.

13. Véhicule pourvu d'un récipient (9) pour le stockage dans celui-ci d'un matériel confidentiel et d'un dispositif (1) selon l'une quelconque des revendications 1 à 10.
